# EUROPEAN PATENT APPLICATION

(11) **EP 4 657 614 A1**
(43) Date of publication of application: **03.12.2025**
(21) Application number: 24178471.9
(22) Date of filing: 28.05.2024
(51) Int. Cl.: H01M 50/105

(54) **BATTERY, BATTERY MANUFACTURING METHOD AND AUTOMATED PLANT**

(71) Applicant: LG Energy Solution, Ltd., Seoul 07335 (KR)
(72) Inventor: HAN, Man Huon, 34122 Daejeon (KR); CHOI, Jin Hyeong, 34122 Daejeon (KR)
(74) Representative: Goddar, Heinz J.

(57) **Abstract**

A battery (100) comprises: an electrode assembly (200), a case (110) including at least one accommodation portion (112) surrounding the electrode assembly (200) and an expansion portion (114) extending outwardly from the accommodation portion (112), wherein the expansion portion (114) is folded or rolled toward the accommodation portion (112) such that a contact surface (120) of the expansion portion (114) lies on the accommodation portion (112) facing the accommodation portion (112), and wherein an adhesive (120) is provided between the expansion portion (114) and the accommodation portion (112) and covers the contact surface (118) at least partially.

## Description

### Technical Field

The present disclosure relates a battery and a battery manufacturing method. In particular, the present disclosure relates to a secondary battery and a manufacturing method for a secondary battery.

### Technical Background

In modern society, as portable devices such mobile phones, notebook computers, camcorder and digital cameras have become popular, the development of battery technology is of great significance. In addition, chargeable/dischargeable secondary batteries have become indispensable power sources for electric vehicles (EV), hybrid electric vehicles (HEV), plug-in hybrid electric vehicles (P-HEV) and the like, in the attempt to solve air pollution, decrease carbon dioxide emissions, and the like, caused by existing combustion engine vehicles using fossil fuel. Therefore, there is a growing need for improvements of secondary batteries.

Currently commercialized secondary batteries include nickel cadmium batteries, nickel hydrogen batteries, nickel zinc batteries, and lithium secondary batteries. Among these, the lithium secondary batteries have come into the spotlight because of various beneficial aspects, for example, they hardly exhibit memory effects compared to nickel-based secondary batteries and thus may be liberally charged and discharged, and they display very low self-discharge rates and high energy density.

A secondary battery may be classified based on the shape of battery case into a cylindrical battery having an electrode assembly mounted in a cylindrical metal can, a prismatic battery having an electrode assembly mounted in a prismatic metal can, and a pouch-type battery. The secondary battery generally accommodates an electrode assembly having a structure in which electrodes and separators are alternately arranged. In the pouch type, the electrode assembly may be accommodated in a pouch-shaped case made of a flexible polymer material or a laminated aluminum sheet.

In order to manufacture the secondary batteries, first of all, electrode active material slurry is applied to a positive electrode collector and a negative electrode collector to manufacture a positive electrode and a negative electrode. The positive electrode and the negative electrode are stacked on both sides of a separator to form an electrode assembly. Subsequently, the electrode assembly is accommodated in a battery case, and the battery case is sealed after an electrolyte is injected therein.

A case for a secondary battery, in particular a pouch-type case for a pouch-type secondary battery, may be manufactured by forming at least one cup portion, for example through press processing a pouch film. The cup portion includes a bottom portion surrounded by one or more sidewalls. The cup portion or cup portions define a space in which the electrode assembly can be accommodated. The case has lateral sections from which the bottom portion is offset by a depth. Such lateral sections may be parts of the pouch film remaining flat after the formation of the cup portion. Typically, some parts of the pouch film extend laterally and outwardly from the cup portion. The battery case is typically sealed along the lateral portions. To minimize dimensions of the battery, the largest lateral expansion portion is attached and adhered to the cup portion.

In the prior art, the expansion portion is attached to the cup portion and adhesive tape is wrapped around the outside of the case thereby fixing the expansion portion to the cup portion. As a result of repetitive charging and discharging of the secondary battery, heat is generated in the electrode assembly accommodated within the case. The heat may lead to a decrease of a cohesive integrity of the adhesive, thereby reducing durability of the battery and other defects. Furthermore, the adhesive having a lower heat transfer coefficient than the pouch film acts as a thermal isoloator. The adhesive film thus prevents heat generated within the battery from efficiently dissipating to the outside, especially in the area where the adhesive tape covers outer surface of the battery. Furthermore, the adhesive film directs the heat towards sides where electrode leads are arranged, thereby increasing the risk of fire incidents. Moreover, the adhesive tape wrapped around the case increases the dimensions thereof, consequently impeding the improvement of energy density in a battery module containing multiple cases.

### DETAILED DESCRIPTION OF THE INVENTION

The technical problems known from the prior art are solved by the subject matter as defined by the features of the independent claims. Particular embodiments of the invention are given by the features of the dependent claims. In the following, embodiments of the invention are introduced, and their features are described in detail. Any, some or all of the embodiments can be combined with one another unless indicated otherwise or technically inappropriate.

Further, where a particular expression, term or component is described using optional features and examples in the following, these optional features and examples may be combined with any, some or all of the optional features and examples of any other expression, term or component, unless indicated otherwise or technically inappropriate.

According to an aspect, a battery is disclosed. The battery may comprise an electrode assembly and a case. In some embodyments, the battery may be a pouch-type battery. The battery may in particular comprise an electrode assembly and a pouch-type case.

The accommodation portion may be adapted to the electrode assembly in shape and/or size. In particular, the accommodation volume provided by the accommodation portion corresponds to the volume of the electrode assembly, the volume of the accommodation space may have a shape, in particular a shape of substantially rectangular cross-section, corresponding to the cross-section of the electrode assembly. The accommodation volume may be no more than three times as large, in particular no more than two times as large, preferably no more than 1.5 times as large, more preferably no more than 1.2 times as large, more preferably no more than 1.1 times as large as the volume of the electrode assembly. In particular, the accommodation portion surrounds the electrode assembly. The electrode assembly may in particular be enclosed in the accommodation portion. The electrode assembly is enveloped by the case. It may be preferred that one single battery, in particular pouch-type battery, includes exactly one accommodation portion. In a battery, in particular a pouch-type battery, one a single electrode assembly may be arranged inside of one respective accommodation portion.

The case, which may be a pouch-type case, includes an expansion portion which extends outwardly from the accommodation portion. The expansion portion protrudes from the accommodation portion, in particular away from the electrode assembly. It may be preferred that the expansion portion may protrude from the accommodation portion in a flap-like manner. It may be preferred that the case, which may be a pouch-type case, has lateral side edges along the common edge of the accommodation portion and the expansion portion. The case, which may be a pouch-type case, may be sealed close along the lateral side edges. The lateral side edge of the case, which may be a pouch-type case, extends in a linear manner along the accommodation portion as well as along the expansion portion. The lateral side edges of the case, which may be a pouch-type case, may extend in the width-direction and/or face in the lengthwise direction of the battery.

According to the present disclosure, the expansion portion is folded or rolled up toward the accommodation portion. In particular, the expansion portion may be rolled up toward the accommodation portion. The expansion portion may be folded or rolled such that a contact surface of the expansion portion lies on the accommodation portion facing the accommodation portion. In particular, the expansion portion may be folded exactly once or at least once. The expansion portion may be folded folded multiple times onto itself. In particular, the expansion portion may be folded exactly two times, at least two times, exactly three times, or at least three times. Alternatively or in addition to the folding, the expansion portion may be rolled up. The expansion portion may be rolled so as to form at least one or more windings. The expansion portion may be rolled up to form 1.5 windings, two windings, three windings or more. The contact surface or contact portion of the expansion portion may be defined by the section of the expansion portion which comes to lie on the accommodation portion facing the accommodation portion as a result of the folding and/or rolling of the expansion portion. For example, if the expansion portion is folded once, the entire first or second surface of the expansion portion, which faces the expansion portion after folding and lies of thereon defines the contact surface.

Further, according to the present disclosure, an adhesive is provided between the expansion portion and the accommodation portion. The adhesive covers the contact surface at least partially. The adhesive may cover the contact surface completely. It may be preferred that the adhesive covers the contact surface only partially. In particular, the adhesive may cover at least 20%, particularly at least 30%, or at least 50% of the contact surface. Additionally or alternatively, the adhesive may cover no more than 99% of the contact surface, in particular no more than 95% of the contact surface, particularly no more than 90% of the contact surface, more particularly no more than 75% of the contact surface.

By limiting the application of adhesive to contact surface between the expansion portion of the accommodation portion, the amount of adhesive can be minimized, thereby minimizing material requirements and thermal isolation effects due to the adhesive. By arranging the adhesive between the folded or rolled up expansion portion and the accommodation portion, heat from the accommodation portion may be dissipated through the expansion portion, which acts similar to a cooling fin. Unlike conventional pouch-type batteries, which have their outside covered by adhesive tape impairing heat dissipation, the battery according to the present disclosure has a maximized surface for heat dissipation. It may be preferred that the adhesive fixes the folded or rolled-up expansion portion to the accommodation portion.

According to some embodiments of the battery according to the present disclosure, the accommodation portion comprises a bottom portion and a sidewall. The expansion portion extends laterally outwards from the sidewall. The electrode assembly may include electrode sheets and one or more separator sheets alternately stacked on the bottom portion in a stacking direction. The sidewall extends in the stacking direction. The adhesive may preferably be arranged between the expansion portion and the sidewall. The contact surface may face the sidewall and a lie completely or at least partially on the sidewall. Adhesive may be provided between the contact surface and the sidewall. It may be preferred that the folded and/or rolled up expansion portion lies exclusively, on this sidewall. By arranging the folded and/or rolled expansion portion of the battery case on the sidewall of the accommodation portion, a particularly compact pouch design can be obtained. The provision of a compact pouch design allows improve energy density in a battery pack.

It may be preferred that the expansion portion extends further from the accommodation portion and/or the electrode assembly than side portions at the lateral edges of the battery case, which may be a pouch-type case. It may be preferred that an electrode lead is arranged at, in particular leads through, lateral edge sections. The first electrode lead may be arranged at, in particular be guided through, a first lateral edge of the battery case, and a second electrode lead may be arranged at, in particular be guided through, the second lateral side section. Alternatively, a second electrode lead may be arranged on and/or guided through the same lateral side edge as the first electrode lead. It may be preferred that the expansion portion of the battery case extends in a different direction than, in particular perpendicular to, the first and/or second electrode lead. The electrode lead preferably protrudes in the lateral direction or lengthwise direction of the battery case. An expansion portion realizes a lateral portion extending outwardly from the accommodation portion. The case, in particular the pouch-type case, may include a folding portion around which the pouch film may be folded onto itself to confine the accommodation space in the cup portion. The electrode assembly may be covered by a part of the pouch film folded over the the accommodation space. The folding portion may be arranged between two cup portions formed in the pouch film so that a pair of cup portions facing each other may be created by folding about the folding portion to create an accommodation portion formed by a pair of cooperating cup portions. The battery case may include one expansion portion opposite from the folding portion in relation to the cup portion. Lateral sections may include a terrace which at least partly surrounds the cup portion of the case. Such a terrace may surround three sides of a four-sided cup portion. The terrace may be connected to upper ends of the sidewalls of the cup portion. The terrace may be U-shaped around the respective cup portion. The terrace may include an expansion portion on an opposite side to the folding portion. The terrace may include side portions connecting between the folding portion and the expansion portion.

It may be preferred that the sidewall facing the contact surface is a sidewall of the accommodation portion opposite to a folding portion of the case. The sidewall on which the expansion portion lies may extend between two lateral side edges of the battery case. Lateral walls may extend along the lateral side edges.

It may be preferred that the expansion portion is folded or and/or rolled up around a folding axis. Preferably, the folding axis extends substantially parallel to the longitudinal direction of the battery case. Alternatively or additionally, the folding axis may be parallel to the folding portion of the battery case. In accordance with the present disclosure, the battery case may have a folding portion and on one side of this accommodation portion, where the pouch film forming the pouch is folded onto itself so as to to enclose the the accommodation portion, and the expansion portion is arranged on the other side of the accommodation portion opposite to the folding portion. The expansion portion is folded and/or rolled around the folding axis. The folding portion extends crosswise, in particular perpendicular, with respect to the second direction. The folding axis extends crosswise, in particular perpendicular, with respect to the second direction. The folding axis extends crosswise, in particular perpendicular, to the lateral edges of battery case.

According to some embodiments of a battery, adhesive may be arranged within a volume confined between the contact surface and the accommodation portion, in particular the sidewall, and the adhesive does not extend beyond this volume. In the longitudinal direction, the volume may be limited between the lateral side edges of the case, which may be a pouch-type case. In the battery, it may be preferred that the adhesive fixing the expansion portion to the accommodation portion is exclusively arranged inside of this volume. The volume may be partially or completely filled with the adhesive. The adhesive may fill at least 20%, in particular at least 30% or at least 50%, and/or no more than 99%, in particular no more than 90%, or not more than 75%, of the volume between the contact surface and the accommodation portion, in particular the sidewall. The thickness of the adhesive between the contact surface and the accommodation portion, in particular the sidewall is preferably no more than 2 mm, in particular no more than one millimeter, preferably no more than 500 µm, or no more than 250 µm. Additionally or alternatively, the thickness of the adhesive layer is no less than 1 µm, in particular no less than 10 µm, preferably less than 50 µm or no less than one hundred micrometers. Limiting the amount of adhesive and confining the adhesive to the volume between the accommodation portion of the contact surface allows to minimize material consumption and thermal influence of the adhesive. Limiting the provision of adhesive to the volume leaves the cases outside free to allow for unimpaired heat dissipation.

In some embodiments of a battery, the adhesive is provided in two or more adhesive segments. An adhesive segment may be formed by deposition of the adhesive in a predefined spot or area. An adhesive segment may be realized by application of a double-sided adhesive tape. The two or more adhesive segments, in particular three adhesive segments, four adhesive segments or five adhesive segments, may be spaced apart from each other. The adhesive segments may be distanced from one another. Alternatively, adhesive may be applied to the pouch in distinct deposition regions and spread from those as the expansion portion is folded or rolled onto the accomodation portion by the pressure applied during folding and/or a rolling, such that the adhesive spreads from the deposition region. Adhesive spread out from two or more deposition regionportions may mix or blend, thereby a united adhesive layer. An adhesive segment may be provided in the shape of a circle, an oval, a polygon, a curve, a line or a combination thereof. It may be particularly preferred to provide the at least one adjesive segment in the shape of a line. The adhesive may be provided in several segments adjacent, in particular parallel to one another. Adhesive segments may extend linearly the longitudinal direction of the case or in a width direction of a case.

In some embodiments of the battery, the at least one of the two or more adhesive segments includes the at least one deposition region in which the adhesive is applied, and a spread region in which the adhesive surface extends from. Spread regions of two or more deposition regions may blend.

In some embodiments, the adhesive may be a thermoplastic adhesive. Alternatively, adhesive may be double sided tape piece of tape. Further alternatively, the adhesive may comprise or consist of at least one solvent, in particular at least one solvent configured to dissolve an external surface layer of the battery case, in particular, the laminate pouch film constituting the case. The adhesive is preferably adapted in accordance with the outside surface layer of the pouch film. In some instances, the adhesive may be adapted specifically to the external surface layer of the pouch film for attaching to the same or a like material. In particular, the adhesive may comprise or consist of polymer material, in particular thermoplastic material, having the same or similar material properties as the external surface layer of the pouch film. The adhesive and the external surface layer of the pouch film may comprise or consist of the same polymer material, or materials.

In some embodiments of the battery, which may be combined with the aforementioned ones, the case is single-piece element integrally including the accomodation accomodation portion and the expansion portion. In particular, the case, in particular the pouch-type case, may comprise or consist of a pouch-film.

The pouch film may have a laminate structure comprising, for example, a metal film and one or more synthetic material layers. For example, the metal film may be made of aluminum (Al), iron (Fe), copper (Cu), chrome (Cr), manganese (Mn), nickel (Ni), magnesium (Mg), zinc (Zn) or a combination or an alloy thereof. For example, the one synthetic material layer, or each of the synthetic material layers, may be made of or contain polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene, benzobisoxazole, polyarylate, Teflon, glass fiber or a combination thereof. The pouch film has a film thickness. The film thickness is preferably constant and/or continuous. The pouch film has a first surface, which in particular is configured for acting as an inner surface of battery case, and a second surface, which in particular is configured for acting as an outer surface of the battery case. The first surface may be in engagement with the electrode assembly be placed within the battery case. The second surface may face away from the electrode assembly and optionally be in engagement with the environment surrounding the secondary battery.

The pouch film may have a pouch film thickness of 100 µm to 250 µm, in particular 160 µm to 200 µm, preferably 175 µm to 190 µm. Preferably, the pouch film includes a gas barrier layer which is made of metal. The metal of the gas barrier layer of the pouch film preferably comprises or consists of aluminum and/or an alloy containing aluminum, particularly including an alloy no. AA80XX series aluminum alloy. The alloy no. of the aluminum alloy may be AA8021. The aluminum alloy may include about 1.3 wt% to about 1.7 wt% of iron and about 0.2 wt% or less of silicon, and may have a grain size of about 10 µm to about 13 µm. The thickness of the gas barrier layer may be 30 µm to 150 µm, in particular 70 µm to 120 µm, preferably 80 µm to 100 µm. The pouch film may further include a sealant layer made of a first polymer, preferably formed as an innermost layer. The thickness of the sealant layer may be 60 µm to 100 µm. Additionally or alternatively, the pouch film may include a surface protection layer made of a second polymer, preferably formed as an outermost layer. The first polymer may be the same as the second polymer or different from the second polymer. In particular, the gas barrier layer is stacked between the surface protection layer and the sealant layer. The pouch film may further include a drawing assistance layer which is made of a third polymer. The third polymer may be the same as or different from the first and/or second polymer. The drawing assistance layer may be stacked between the surface protection layer and the gas barrier layer. A thickness of the drawing assistance layer may be 10 µm to 75 µm, particularly 20 µm to 50 µm.

The first polymer may be made of one or more materials selected from the group consisting of polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. In particular, polyolefin-based resin such as polypropylene (PP) or polyethylene (PE) may be a main component in the first polymer. Polypropylene (PP) may provide excellent mechanical properties including tensile strength, rigidity, surface hardness, wear resistance, and thermal resistance, and excellent chemical properties including corrosion resistance and therefore be selected as a main component of the sealant layer.

The second polymer may be made of one or more from polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. It may be advantageous to mainly use a polymer having a desirable wear resistance and thermal resistance, such as polyethylene terephthalate (PET).

The third polymer may be made of one or more from polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. Particularly, a nylon resin may be easily bonded to the polyethylene terephthalate (PET) of the surface protection layer and may exhibit a similar behavior to the aluminum alloy of the moisture barrier layer during and after a drawing process. Thus, a nylon resin may be used as main component of the third polymer.

The present disclosure may also relate to a battery module comprising at least two, preferably multiple pouch-type batteries. In particular, the battery module may comprise several pouch-type batteries stacked in the stacking direction.

Furthermore, the present disclosure relates to an electric vehicle comprising at least one or morepouch-type batteries according to the present disclosureAn electric vehicle may comprise one or more battery modules, each including two or more batteries, in particular two or more pouch-type batteries, according to the present disclosure.

It may be preferred that the expansion portion is fixed to the accommodation portion by means of the adhesive. In particular, the expansion portion is fixed to the accomodation portion, in particular the sidewall, exclusively by means of the adhesive. The battery of the present disclosure may preferably be entirely free an adhesive strip or on the outside of the battery which fixes expansion portion to the accommodation portion.

According to an aspect of the present disclosure, a battery manufacturing method is provided. The battery may be manufactured by the battery manufacturing method as disclosed herein. The battery manufacturing method may be implemented to manufacture the battery as disclosed herein. The battery manufacturing method comprises a step of providing a case, in particular a pouch-type case, comprising an accommodation portion configured to surround electrode assembly, and an expansion portion extending outwardly from the accomodation portion. It may be preferred that a case comprising the accommodation portion and the expansion portion is provided as described herein, for example by deep-drawing and/or punching a pouch film and/. The battery manufacturing method further comprises the step of arranging an electrode assembly in the accommodation portion. Arranging the electrode assembly inside of the accommodation portion may be performed during, or, preferably, after the case is provided with the accommodation portion.

Furthermore, the battery manufacturing method may comprise folding and/or rolling the expansion portion toward the accommodation portion. Folding and/or rolling the expansion portion on the accommodation portion is preferably performed while, before, or, preferably, after the electrode assembly is provided. In particular, folding and/or rolling up of the expansion portion may be performed after the electrode assembly is positioned inside of the accommodation portion. The battery manufacturing method further comprises a step of providing adhesive so as to at least partially fill a volume confined between the expansion portion and the accommodation portion, and fixing the expansion portion to the accommodation portion by means of the adhesive. The adhesive may be provided before, during or after the folding or rolling of the expansion portion toward the accommodation portion. The volume confined between the expansion portion and the accommodation portion is realized by folding or rolling the expansion portion toward the accommodation portion. The adhesive may be injected into the volume after the expansion portion has been folded and/or rolled onto the accommodation portion. Alternatively, the adhesive may be applied during the course of folding and/or rolling the expansion portion onto the accommodation portion. In particular, the adhesive may be applied to the accomodation portion, in particular the sidewall: By folding and/or rolling the expansion portion and lying it onto a sidewall of the accommodation portion, the cross-sectional size of the case extending in the thickness direction and longitudinal direction when seen in the width direction can be minimized, which may allow for an improved energy density.

The battery manufacturing method further comprises the step of fixing (attaching) the expansion portion to the accomodation portion by means of the adhesive. Fixing the expansion portion to the accomodation portion may for example be performed by curing, drying and/or cooling the adhesive. Alternatively, fixing the expansion portion to the accommodation portion. By means of the adhesive may include a physical and/or chemical reaction of the adhesive or parts thereof with the external surface of the pouch film and.

According to some embodiments, the battery manufacturing method comprises a step of applying the adhesive on the accommodation portion and/or the expansion portion. The application of the adhesive onto the expansion portion and/or onto the accommodation portion may be performed before, during or after folding and/or rolling the expansion portion onto the accommodation portion. In particular, the adhesive may be applied onto the expansion portion and after the adhesive is applied onto the expansion portion, the expansion portion may be folded and/or rolled the accommodation portion. The adhesive may be applied onto the section of the expansion portion which is designated to become the contact surface of the expansion portion which, after folding and/or rolling up, faces the accommodation portion and lies on the accommodation portion.

In a further embodiment of the disclosure, which may be combined with the aforementioned ones, the method includes folding and/or rolling the expansion portion toward the sidewall of the accommodation portion so that the expansion portion forms a contact surface that faces the accomodation portion and comes to lie on the accommodation portion. The adhesive may cover the contact surface at least partially.

Some embodiments of the battery manufacturing method further comprises depositing the adhesive in at least two deposition regions on the expansion portion and/or on the accommodation portion of the adhesive may be deposited in one or more deposition region on a section of the expansion portion designated to become the contact surface. Alternatively or additionally, the adhesive may be deposited in one or more deposition regions on the accommodation portion. For example, the adhesive may be deposited on one first deposition region on the expansion portion and furthermore adhesive may be deposited in a second deposition region on the accommodation portion. It may be preferred that the at least two deposition regions are separate from each other. In particular, the at least two deposition regions in which the adhesive is applied to the expansion portion and/or accomodation portion are spaced apart in the longitudinal direction of the battery. Alternatively or additionally, the at least two deposition regions may be spaced apart in a width direction of the type battery. For example, adhesive may be applied onto the expansion portion in the parallel lines extending in the longitudinal direction and spaced apart and the width direction, or vice versa.

The battery manufacturing method may further comprise a step of pressing the expansion portion and the accommodation portion against each other such that the adhesive deposited in the at least one or at least two deposition regions spreads out laterally. Pressing the expansion portion against the accommodation portion may be performed during folding and/or rolling of the expansion portion. The adhesive may be spread out as a layer from the deposition portions as the expansion portion is pressed against the accommodation portion so as to spread over the contact surface and/or volume between the accommodation portion and expansion portion. By spreading the adhesive, a thin and even adhesive layer may be formed in the volume between the accommodation portion and the expansion portion.

In some embodiments of the battery manufacturing method, the adhesive may be provided, in particular deposited, in a segment having the shape of a circle, an oval, a polygon, a curve, a line, or a combination of two or more of shapes. Two or more deposition regions may be provided with the same shape. For example, multiple deposition regions may be provided in the same shape (e.g. of a circle or line). Optionally, the several deposition regions may be configured to have the same shape and size. The respective shape of a deposition portion may be determined in a plan view perpendicular to the contact surface or sidewall. The adhesive applied in the two or more deposition regions may be dispersed on the expansion portion, in particular the contact surface, by the attaching the expansion portion to the accommodation portion such that adhesive is arranged, in particuarl an adhesive layer is formed, beyond the one, two or more deposition regions, preferably without extending beyond the volume.

A battery and/or battery module may be manufactured by the battery manufacturing method as disclosed herein. The battery manufacturing method may be implemented to manufacture the battery or battery module as disclosed herein.

According to an aspect, an automated plant is disclosed. The automated plant may be configured to perform the battery manufacturing method as disclosed herein. The automated plant may include or implement any of the examples and optional features of the battery manufacturing method as disclosed herein. The automated plant may be capable of carrying out the battery manufacturing method as disclosed herein. Additionally or alternatively, the automated plant may be capable of carrying out any, some or all of the examples and features of the battery manufacturing method as disclosed herein. The battery manufacturing method may be implemented so as to be carried out through the automated plant as disclosed herein.

The automated plant may be or include a smart factory, in which the battery manufacturing method as disclosed herein is carried out. The examples and optional features of the battery manufacturing method as disclosed herein may also apply to the smart factory. The term "smart factory" is used herein as commonly understood in the field of industrial processing, particularly in the fields of automation, Internet of Things, artificial intelligence, big data analytics, cloud computing and robotics. In particular, the smart factory may be understood in connection with the Industry 4.0 paradigm. The smart factory as used herein may also be referred to as a digital factory or intelligent factory and may indicate an advanced manufacturing facility that utilizes various digital technologies, automation, and data exchange in production processes.

Hereinafter, the term "the battery manufacturing method" may be shortened to "the method" for brevity. The method as described herein may be configured to operate and carried out, respectively, in an industrialized production process.

Herein, the term "battery" may be used in accordance with the teachings of electrochemical energy storage. The battery may refer to a primary battery and/or a secondary battery. Specifically, a battery as used herein may indicate a product that is configured to store chemical energy and enables a conversion of the stored chemical energy into electrical energy. In some examples, the battery may explicitly refer to a secondary battery that is rechargeable.

The electrode assembly as disclosed herein may refer to a stack of layers comprising one or more positive electrodes, one or more separators, and one or more negative electrodes in an alternating manner. The electrode assembly may have a rectangular shape in a plan view. The plan view may refer to a view direction perpendicular to the layers (i.e., the entirety of the electrodes and separator(s)) of the electrode assembly. In a rectangular shape, two opposite sides are of equal length and parallel to each other.

A stacked electrode assembly may be classified based on the structure in which its positive electrode sheet or sheets (cathode) and its negative electrode sheet or sheets (anode) are stacked with at least one separator being interposed therebetween. For example, there may be a stacked (laminated) type structure in which pluralities of cathodes and anodes, cut into predetermined unit sizes, are sequentially stacked with separators being interposed between the cathodes and the anodes, or the like. Alternatively, there there may be a stacked/folded type electrode assembly, which is a combination of the jelly-roll type electrode assembly and the stacked type electrode assembly. Such a stacked/folded type electrode assembly may also be referred to as a stacked electrode assembly.

The electrode assembly may have a first main surface and a second main surface. The first main surface and the second main surface may be outer planar surfaces of the electrode assembly. For example, the first main surface may be a top surface of the electrode assembly and the second main surface may be a bottommost surface of the electrode assembly. The first main surface and the second main surface may be opposite to each other. A perpendicular distance from the first main surface and the second main surface may define a thickness of the electrode assembly. The first main surface and the second main surface may extend in a longitudinal direction and in a width direction perpendicular to the longitudinal direction. The first main surface and the second main surface may have a rectangular shape in a plan view, i.e., in a viewing direction perpendicular to the first main surface and the second main surface. Herein, the longitudinal direction may refer to a direction that is parallel to the longer sides of the sides of the rectangular shape of the electrode assembly. The width direction may refer to a direction that is parallel to the shorter sides of the sides of the rectangular shape of the electrode assembly.

The electrode assembly may comprise an electrode lead. The electrode lead of the electrode assembly accommodated in the case, which may be a pouch-type case, may protrude from the case to the outside so as to supply electricity to the outside of the secondary battery. The electrode assembly may further comprise a plurality of electrode leads. For example, the electrode assembly may comprise two electrode leads. One of the two electrode leads may be connected to the positive electrode and another one of the two electrode leads may be connected to the negative electrode. In an example, the electrode lead connected to the positive electrode and the electrode lead connected to the negative electrode may protrude in the longitudinal direction outside of the case opposite to each other. However, the present invention is not limited thereto, and the electrode lead connected to the positive electrode and the electrode lead connected to the negative electrode may protrude in the same direction in parallel with each other.

The case as disclosed herein may contribute to protecting the electrode assembly against external mechanical stress, such as impact, shock, vibration etc. The case may refer to a flexible film or a flexible laminate of a heat resistant material that may be shaped such to accommodate the electrode assembly. The case, in particular the pouch-type case, may be shaped, for example by pressing and/or drawing the flexible sheet or the flexible laminate in a thickness direction (depth direction) such as to form a recess or a planar protrusion. Herein, the thickness direction may be defined as a direction in which the thickness of the electrode assembly extends (stacking direction).

### ADVANTAGEOUS EFFECTS

The battery as disclosed herein may allow for reducing an amount of the applied adhesive, thereby resulting in material savings and reducing costs in the battery manufacturing process. Additionally, the battery as disclosed herein may allow for minimizing the dimensions of a battery, to allow for increasing energy density in a battery module. Furthermore, the battery as disclosed herein may improve dissipation of the heat generated by repetitive charging or discharging of the battery. In particular, the battery as disclosed herein may hav a reduced risk of fire incidents. Additionally or alternatively, the battery as disclosed herein may display enhanced stability and durability. The above technical effects may in particular be obtained through the battery manufacturing method as disclosed herein. Further, the above technical effects may be even further increased by implementing any of the optional features described in detail below

The effects of the present disclosure are not limited to the effects mentioned above and additional other effects not described above will be clearly understood from the description of the appended claims by those skilled in the art.

### BRIEF DESCRIPTION OF THE DRAWINGS

- FIG. 1: is an assembly view of a battery;
- FIG. 2: is a schematic view showing a state in which a pouch case is being folded;
- FIG. 3: is a schematic view showing a state in which a pouch case is folded;
- FIG. 4: a schematic view showing an embodiment of a battery having its folded expansion portion fixed by adhesive to its accommodation portion,
- FIG. 5: a schematic view showing the embodiment a case of FIG. 4 before its expansion portion is folded once,
- FIG. 6: a schematic view showing an embodiment of a battery similar to that of FIG. 4. provided with a cover,
- FIG. 7: a schematic view showing a different embodiment of a battery having its folded expansion portion fixed by adhesive to two sides of its accommodation portion,
- FIG. 8: a schematic view showing another embodiment of a battery having its folded expansion portion fixed by adhesive to its accommodation portion,
- FIG. 9: a schematic view showing an embodiment of a battery similar to that of FIG. 8. provided with a cover,
- FIG. 10: a schematic view showing a further embodiment of a battery having its folded expansion portion fixed by adhesive to its accommodation portion,
- FIG. 11: a schematic view showing the embodiment a case of FIG. 10 before its expansion portion is folded three times,
- FIG. 12: a schematic view showing an embodiment of a battery having only one cup portion,
- FIG. 13: a schematic view showing the embodiment a case of FIG. 12 before its expansion portion is folded,
- FIG. 14: a schematic view of a connection portion with five circular adhesive segments,
- FIG. 15: a schematic view of the connection portion of FIG. 14 wherein the adhesive is spread out from the adhesive segments,
- FIG. 16: a sectional view of a connection portion covered by an adhesive layer along the line A-A of Fig. 15,
- FIG. 17: a schematic view of a connection portion with five linear adhesive segments,
- FIG. 18: a schematic view of the connection portion of FIG. 17 wherein the adhesive is spread out from the adhesive segments,
- FIG. 19: a schematic view of a connection portion with three longitudinally extending linear adhesive segments,
- FIG. 20: a schematic view of the connection portion of FIG. 19 wherein the adhesive is spread out from the adhesive segments,
- FIG. 21: a schematic diagram of a battery manufacturing method; and
- FIG. 22: another schematic diagram of a battery manufacturing method.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Hereinafter, a battery case is described with reference to the accompanying drawings.

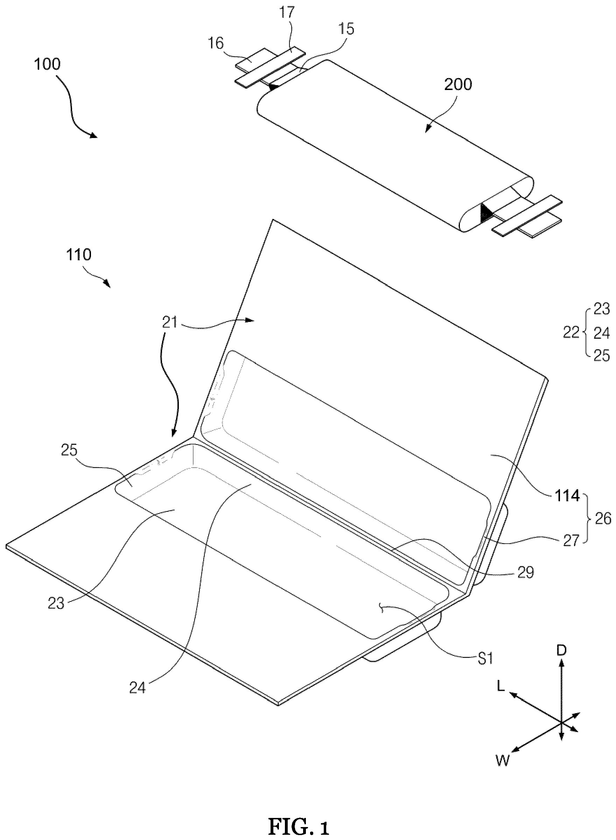

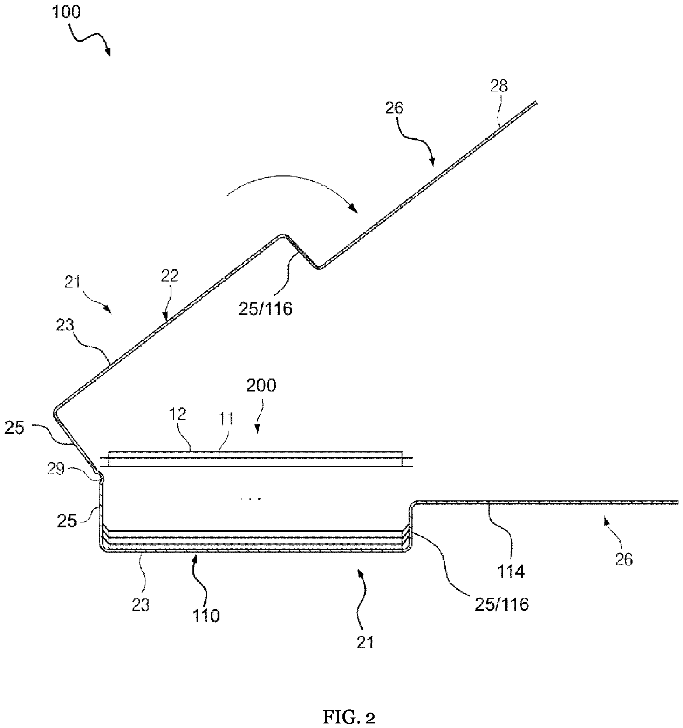

FIG. 1 is an assembly view of a secondary battery. Although the illustrations and description describe exemplary embodiments in the form of pouch-type secondary batteries, the skilled person is aware that the invention may also be applicable to other types of batteries. FIG. 2 is a schematic view illustrating a folding process for forming a pouch including an accommodation portion 112.

A secondary battery 100 (also referred to hereinafter as a battery) may include an electrode assembly 200 and a pouch case 110 to accommodate the electrode assembly 200. Generally, a pouch as disclosed herein may also referred to as a secondary battery case, a case or a case.

The electrode assembly 200 may be formed by alternately stacking separators 11 and electrodes 12, see e.g. FIG. 2. The electrodes 12 may include positive electrodes and negative electrodes. The positive electrodes and the negative electrodes may be alternately stacked with separators 11 therebetween.

Each of the electrodes 12 may be formed by applying an active material slurry onto an electrode collector. The electrode collector may be provided as, or comprise, a metal foil or a metal mesh. For example, the electrode collector may include aluminum or an aluminum-based material. For example, the electrode collector may include copper or a copper-based material.

Electrode tabs 15 may be provided in the electrode assembly 200. Each of the positive electrode and the negative electrode of the electrode assembly 200 may be connected with a respective one of the electrode tabs 15. The electrode tabs 15 may be connected to electrode leads 16. A respective electrode lead 16 may be connected to the first or second electrode 12 by means of one or more electrode tab 15. A first electrode lead 16 may be electrically connected with the positive electrode. A second electrode lead may be may be electrically connected with the negative electrode. The electrode leads 1615 may protrude outward from the electrode assembly 200, thereby providing a passageway for electrons to move into and out of the electrode assembly 200.

The electrode tabs 15 connected to the positive electrodes and the electrode tabs 15 connected to the negative electrodes may be associated with electrode leads which protrude from the electrode assembly 200 in different directions. Alternatively or additionally, the electrode kead 16 connected to the positive electrodes and the electrode tabs 15 connected to the negative electrodes may protrude from a same side of the electrode assembly 200 in a same direction.

Electrode leads 16 for conducting electricity out from the secondary battery 100 are connected to the electrodes tab 15. The electrode tabs 16 may be connected to the electrode tabs 15 through spot welding or the like. One end of an electrode lead 16 may be connected to the electrode tabs 15, and the other end of the electrode lead 16 may protrude outward from the pouch case 110.

The electrode tabs 16 may be in a part surrounded by a respective insulating part 17. For example, the insulating part 17 may include an insulating tape. The insulating part 17 may be positioned between a pair of terraces 26 of the pouch case 110 which will be described later. With the electrode assembly 200 in place, the pair of terraces 26 may be heat-fused to each other. During this, a portion of the pair of terraces 26 may be heat-fused with the insulating part 17. Thus, the insulating part 17 may provide electrical insulation between the electrode assembly 200 and the pouch case 110, in particular an electrical leakage via the electrode tab 16. At the same time, the insulating part 17 may provide sealing of the pouch case 110, in particular to maintain an electrolyte inside the pouch case 110.

The pouch case 110 may be formed as a pair of shells 21 (cases) connected to each other via a folding portion 29. Hereinafter, the structure of each shell 21 will be described with reference to a state before folding (and/or sealing) the pouch case 110. The following description may also apply to a state in which the pouch case 110 is opened wide by removing bonding or sealing between the shells 21 of the pouch case 110. The shells 21 may be formed as mirror images of each other in a plan view, wherein dimensions of the shells 21 may differ in a depth direction D, or any of the features described may be provided differently to the individual shells 21. Alternatively, the pouch may comprise a single shell 21.

The shells 21 may each have a tray-like shape that is opened to one side. Each of shells 21 may include a cup portion 22 having a recessed shape and a terrace 26 surrounding the cup portion 22. Each of the shells 21 may comprise a bottom portion 23, sidewalls 24, and lateral walls 25 (also referred to as outer walls or peripheral portions as described below) and the terrace 26. Sidewalls 24 extend as a plane in the longitudinal direction L and in the stacking direction D. Lateral walls 25 extend as a plane in the width direction W and in the stacking direction D. The bottom portion 23 may be substantially flat and have a four-sided shape with rounded corners. The sidewalls 24, and lateral walls 25 may surround the bottom portion 23 and extend between the bottom portion 23 and the terrace 26. In examples where the bottom portion 23 has a four-sided shape, the sidewalls 24, and lateral walls 25 may comprise two sidewalls and two lateral walls 25 corresponding to the four sides of the bottom portion 23. A sidewall 24 that is arranged proximal and parallel to the folding portion 29 may be referred to as a folding surface. The terrace 26 may surround at least one of the sidewalls and lateral walls, and specifically surround the lateral walls 25 (as described below). The terrace 26 may extend laterally outwards from the respective sidewall 24, and lateral walls 25. The terrace 26 of either of the shells 21 may be flat and have a shape of a sheet. The terrace 26 may be arranged substantially parallel to the respective bottom portion 23. The terraces 26 opposite to the folding sidewall 29 form an expansion portion 114 of the case 110.

The cup portion 22 may be recessed from the terrace 26 by a predetermined depth to form an accomodation space S1. The accomodation space S1 may also referred to as a recessed space S1. The accomodation space S1 may be configured to accommodate the electrode assembly 200 therein. The accomodation space S1 may be dimensioned such to receive the electrode assembly 200. The accomodation space S1 may correspond to the cup portion 22 as disclosed herein. As shown in FIG. 1, the accomodation space S1 may be formed by the bottom portion 23, the sidewalls 24, and the lateral walls 25 as described above.

The cup portions 22 of the pair of shells 21 may be connected to each other via the folding portion 29. That is, the folding portion 29 may be arranged between the pair of cup portions 22. The folding portion 29 may be referred to as a bridge in a state in which the pouch case 110 is unfolded.

A direction in which the folding portion 29 extends may define the longitudinal direction L of the secondary battery 100 (of the pouch case 110). Herein, a width may be determined in a width direction W of the shell 21 that is perpendicular to the longitudinal direction L and along a plane in which the respective shell 21 (or the respective cup portion 22) lies. A depth may be determined in a depth direction D that is perpendicular to the longitudinal direction L and perpendicular to the width direction W of the respective shell (or the respective cup portion 22). The depth direction D may also be referred to as a stacking direction of the electrode assembly 200. As such, the width direction W and the depth direction D may be tied to the orientation of the respective shell 21 (i.e., may move together with the respective shell 21, as the pouch case 110 is folded). The longitudinal direction L, the width direction W and the depth direction D may be perpendicular to one another. In FIG. 1 and some of the following drawings, the longitudinal direction L, the width direction W and the depth direction D are depicted to help orientation. Any of these directions L, W and D may refer to the secondary battery 100 as a whole (e.g., after folding and sealing), to the pouch case 110, to the respective shell 21 or the respective cup portion 22.

With the electrode assembly 200 being accommodated in the recessed space S1 of one of the cup portions 22, the pouch case 110 may be folded about the folding portion 29 so that the pair of cup portions 22 face each other. Accordingly, the other one of the cup portions 22 may be arranged over the electrode assembly 200 so as to cover it. That is, the pouch case 110 may be folded such that the recessed spaces S1 of the cup portions 22 communicate with each other, with the electrode assembly 200 being accommodated in the accomodation spaces S1.

The recess depths of the pair of cup portions 22 may be equal. The pair of cup portions 22 may be formed to be mirror-symmetrical to each other. Alternatively or additionally, the recess depths of the pair of cup portions 22 may be different, and the pair of cup portions 22 may not be mirror-symmetrical.

In the following, the pouch case 110 (shourt: pouch) will be described with reference to a quadrangular tray-like shape of the shells 21 as exemplarily shown in FIG. 1, where the bottom portion 23 has a four-sided shape with rounded corners in a plan view, and the sidewalls 24, and lateral walls 25 may be formed along edges of the bottom portion 23 with a constant depth. The peripheral portions 24, and lateral walls 25 and the bottom portion 23 may be provided as a single piece. In either one of the shells 21, the bottom portion 23 may be formed in parallel to the terrace 26. The bottom portion 23 may be provided as a flat sheet (specifically a laminate as described above).

Hereinafter, the sidewalls 24, and lateral walls 25 may be referred to as peripheral portions 24, 25 in a generic manner, unless indicated otherwise. The peripheral portions 24 and 25 may surround the recessed space S1 in conjunction with the bottom portion 23. Each of the peripheral portions 24, 25 may be made of a flat sheet (specifically a laminate as described above).

The terrace 26 may partly surround the cup portion 22 of the respective shell 21. As for example shown in FIG. 1, the terrace 26 may surround three sides of the four-sided cup portion 22. The terrace 26 may be connected to upper ends of the second surfaces 25 of the cup portion 22. The terrace 26 may be U-shaped around the respective cup portion 22.

The terrace 26 may include an expansion portion 114 on an opposite side to the folding portion 29. The terrace 26 may include side portions 27 connecting between the folding portion 29 and the expansion portion 114.

The expansion portion 114 may extend from the adjoining sidewall 25 in a direction perpendicular to the longitudinal direction L of the pouch case 110, which may be defined by the direction in which the folding portion 29 extends, as described above. The side portions 27 may extend from the respective adjoining lateral wall 25 in a direction parallel to the longitudinal direction of the pouch case 110. The side portions 27 may be arranged on opposite sides of the cup portion 22.

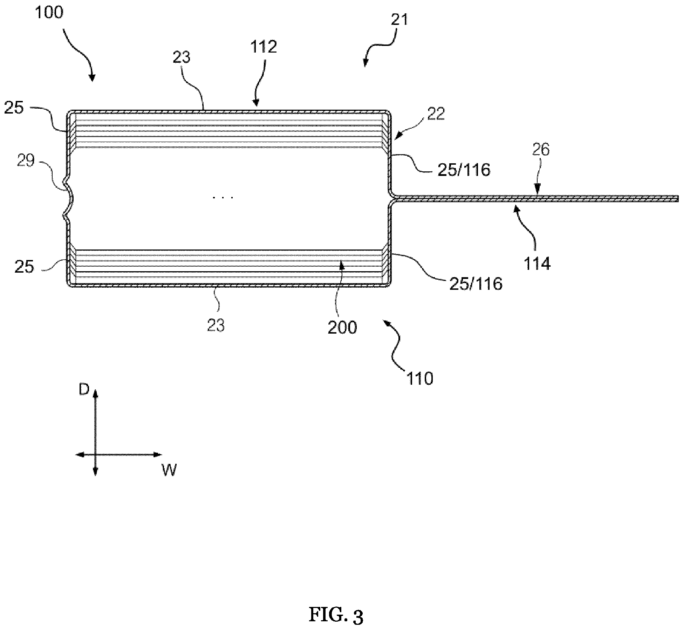

FIG. 3 is a schematic view showing a state in which a pouch is folded (thus closed). With the electrode assembly 200 being disposed between the cup portions 22, the pouch case 110 may be folded about the folding portion 29. Then the terraces 26 may be fused with each other. As a result, the secondary battery 100 may be formed comprising the shells 21 sealed in the above manner.

The secondary battery 100 may include an accommodation portion to accommodate the electrode assembly 200. The accommodation portion 112 may correspond to the accommodation space S1 of the shells 21 after folding the pouch case 110 in the manner disclosed herein. The accommodation space is surrounded by the accommodation portion 112. The accommodation portion 112 surrounding the accommodation space may comprise a sealing portion in which the shells 21 are fused with each other.

The accommodation portion 112 may be provided by the cup portions 22 of the shells 21 arranged such as to communicate with each other. Hereinafter, since the sealing portion is formed as the terraces 26 of the shells 21 are fused, the sealing portion may be correspondingly labelled with the reference sign 26.

The accommodation portion 112 may include a bottom surface and a top surface which cover the electrode assembly 200 from both sides with respect to the stacking direction of the electrode assembly 200. The bottom surface and/or the top surface of the accommodation portion 112 may be provided by the bottom portions 23 of the shells 21 (i.e., correspond to the bottom portions 23).

The accommodation portion 112 may include peripheral walls 24, 25 which form a perimeter (surfaces) of the accommodation portion 112 and laterally surround the electrode assembly 200. The outer walls of the accommodation portion 112 may be provided by the sidewalls 24, and lateral walls 25 of the shells 21 and the folding portion 29.

The outer walls may include a folding portion-side sidewall (outer wall) including the folding portion 29. The folding portion-side outer wall may refer to the outer wall of the accommodation portion 112 that is arranged on the side of the folding portion 29. As such, the folding portion-side outer wall may include the folding portion 29 and the first sidewalls 24 of the shells 21. Hereinafter, the folding portion-side outer wall may be labelled with the reference sign 29 in a simplifying manner and the opposite sidewall with the reference sign 118. Also, the folding portion-side outer wall 24 may be referred to as fold sidewall 24 or outer wall. These terms may be used interchangeably hereinafter.

In an example, the accommodation portion 112 may be block-shaped with four sidewalls extending between a four-sided bottom portion (i.e., the bottom portion 23 of a first shell 21) and a four-sided top portion (i.e., the bottom portion 23 of a second shell 21). In such example, the sidewall that is arranged on the side of the folding portion 29 may be referred to as the fold sidewall 24.

The bottom surface of the accommodation portion 112 may be formed by the bottom portion 23 of one of the shells 21 (i.e., the shell 21 arranged at the bottom). The top surface of the accommodation portion 112 may be formed by the bottom portion 23 of the other one of the shells 21 (i.e., the shell 21 arranged on top).

The folding portion-side outer wall of the accommodation portion 112 may be formed by the sidewall 24, the lateral surfaces 25 of the cup portions 22 and the folding portion 29. Hereinafter, the folding portion-side outer wall of the accommodation portion 112 may be labelled with the reference sign 29 for the sake of convenience, and may include the folding portion after folding the pouch case 110 (and fusing the terraces 26). When the cup portions 22 of the shells 21 have the same or similar depth, the folding portion may be located in a central region of the folding portion-side outer wall 29 with respect to the stacking direction of the electrode assembly 200.

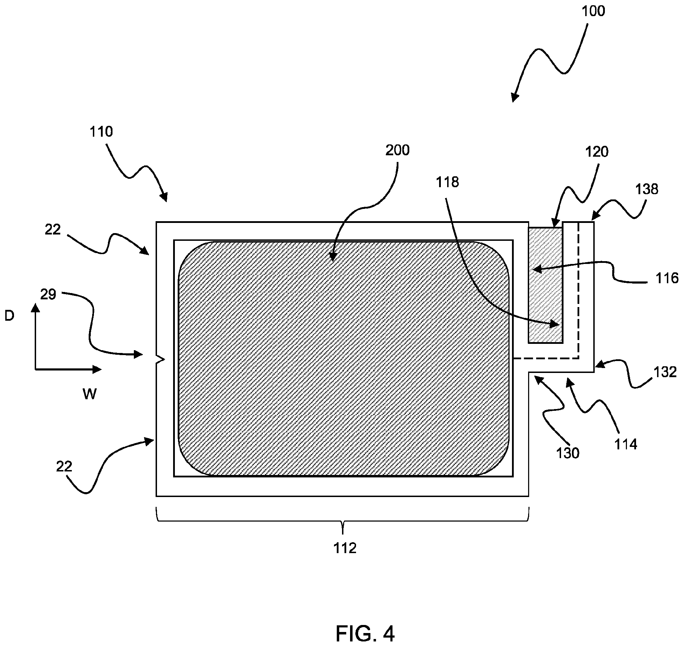

FIG. 4 shows a first embodiment of the battery 100 according to the present disclosure. The accommodation portion 112 is formed by two cup portions 22 is folded onto one another around a folding portion 29. The folding portion 29 extends in the longitudinal direction L of the battery 100. The battery case 110 envelopes the schematically illustrated electrode assembly 200. The case 110 may in particular realize a pouch-type case of a pouch-type battery. The electrode assembly 200 (electrode stack) is accommodated within the accommodation portion 112. The stacked electrode assembly 200 is arranged on a bottom portion23of the first (lower) cup portion 22. The first main surface (bottom surface) of the electrode stack engages the bottom surface 23. A second main surface (top surface) of the electrode stack engages the bottom surface of the second cup portion which is folded over the first cup portion to form the accommodation portion 112.

The accommodation portion 112 surrounding the electrode assembly 200 is integrally connected with an expansion portion 114 protruding outwardly from the expansion portion 112. The battery case 110 may include a pouch film. The accommodation portion 112, as well as the expansion portion 114 consist of this same pouch film. The cup portions 22 forming the accommodation portion 112, as well as the folding portion 29 between the cup portions 22, are made of the pouch film. The expansion portion 114 is also made of the pouch film. In other words, in the battery case 110 may be made as a single element form of the pouch film. The pouch film is shaped, for example by deep drawing, to have the cup portions 22. Furthermore, the pouch film is shaped to realize an accomodation portion 112 by folding the pouch film about the folding portion such that the second cup portion rests on top of the first cup portion. The first and second cup portions 22 have substantially the same cross-sectional shape, such that the second cup portion 22 may rest congruently on the first cup portion to establish the accommodation portion 112. The expansion portion 114 is situated on the opposite side of the accommodation portion 112 in relation to the folding portion 29. As shown in FIG. 4, the folding portion 29 is arranged on the left of the accommodation portion 112 and the expansion portion 114 is arranged on the right side of the accommodation portion 112. The accommodation portion 112 is situated between the folding portion and the expansion portion 114 inhe width direction W of the battery case 110.

In the example shown in FIG. 1, the expansion portion 114 is folded such that it lies against the accommodation portion 112. As illustrated in FIG. 4, the expansion portion 114 is folded upward in the such that a contact surface 118 facing the accommodation portion 112 lies on the sidewall of the upper cup portion 22. An adhesive 120 is provided between the folded expansion portion 114 and the accommodation portion 112. The adhesive 120 fills between 80 % and 85 % of the volume between the sidewall 116 of the upper cup portion 22 and the contact surface 118 of the expansion portion 114. The thickness of the adhesive 120 may be constant in the entire volume. It shall be clear that the thickness of the adhesive 120 between the accomodation portion 112 and the expansion portion 114 is illustrated in an exaggerated manner to improve intelligibility. It shall also be clear that the thickness of the film forming the case 110 is exaggerated to improve intelligibility of the schematic illustration. Substantially all of the contact surface 118 of the expansion portion 114which lies on the accommodation portion 112 facing the same is covered by the adhesive.

The connection portion extends between the root section 130 of the expansion portion and of the distal end 138 thereof. The connection portion 118 of the expansion portion 114 is provided by a second (upper) surface section of the expansion portion which faces upwards before the expansion portion 114 was folded about the first fold 132 near or at the root section 130 toward the accommodation portion 112. Alternatively, the expansion portion may be rolled up towards the accommodation portion (not shown in detail).

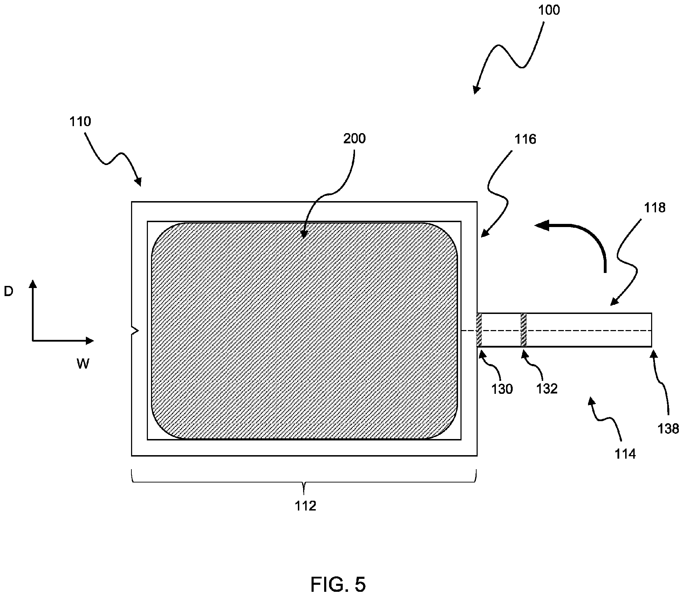

FIG. 5 is a schematic illustration of the battery 100 which may be realized as described above with respect to FIG. 4. The state after folding the expansion porition 114 is shown in FIG. 4. In the intermediate state before folding shown in FIG. 5, the expansion portion 114 protrudes laterally from the accommodation portion 112 beginning at the root section 130. The more indicate the first formed (first foldi) 132, around which the expansion portion 114 may be folded to obtain the folded state indicated in FIG. 4. The adhesive 120 which is shown in FIG. 4, may be applied to the sidewall 116 of the accommodation portion 112 and/or to the expansion portion to the contact surface 118 of the expansion portion 114.

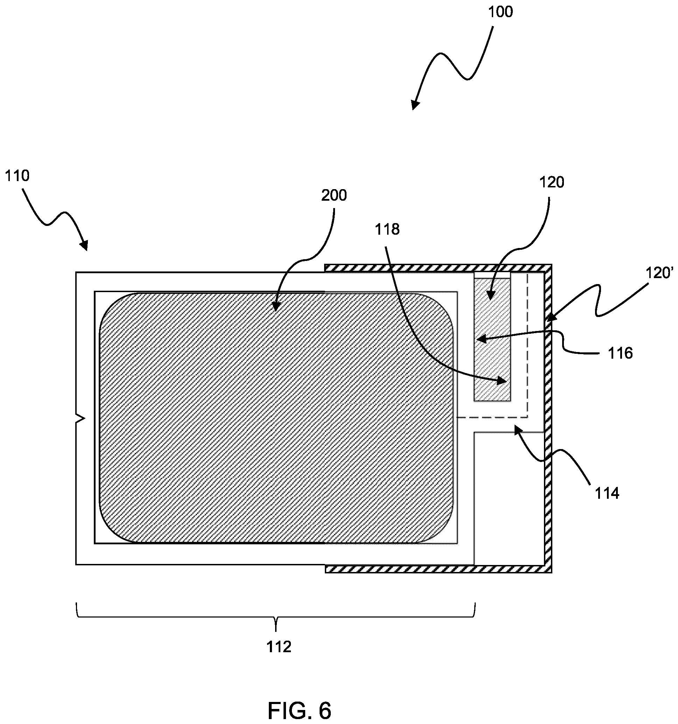

FIG. 6 shows another alternative embodiment of a battery 100 which is essentially identical to that described with respect to FIG. 4, and additionally provided with a cover 120' surrounding the expansion portion 114 which is folded toward accommodation portion 112. The cover 120' may surround the accommodation portion 114, the adhesive 120 and additionally one or more adjacent sections of the accommodation portion 112. The cover 120' may be realized as a clamp configured to secure the folded and/or rolled expansion portion 114 to the accommodation portion 112. The cover 120' may comprise or consists of an adhesive tape. A cover 120' such as an adhesive tape may be provided to enhance the attachment of the expansion portion to the accommodation portion.

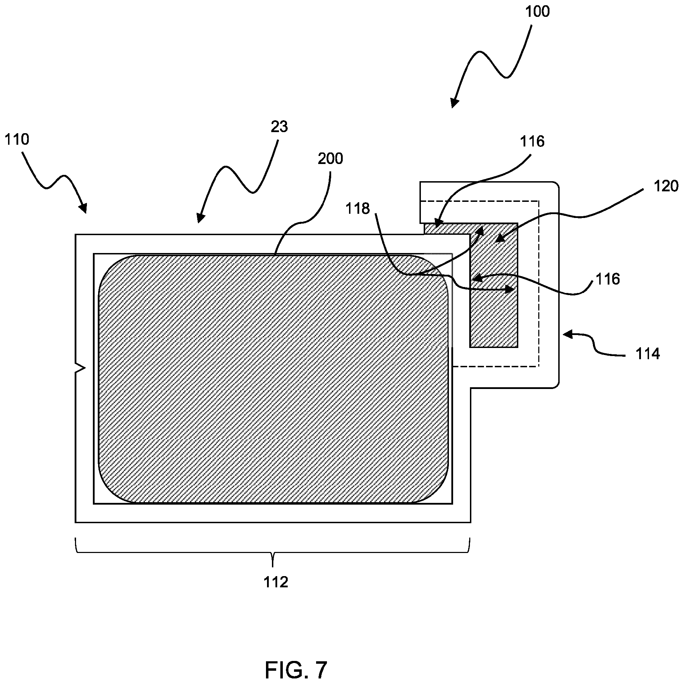

FIG. 7 shows another embodiment of a battery 100. The embodiment shown in FIG. 7 issimilar to the embodiment shown in FIG. 4, except that the expansion portion 114 is folded such that its contact surface 118 lies against a sidewall 24 and a section of the bottom portion 23 of the cup portion 22 of the accommodation portion 112. The adhesive 120 is arranged in the volume defined between the connection portion 118 and the accommodation portion 112. In other words, the volume filled with adhesive 120 as displayed in FIG. 4 is confined on the one side between the connection portion 118 and on the other side two sections of the accommodation portion 112. The sections of the accommodation portion 112 limiting the volume include a first section defined by the entire surface of the sidewall 24 of the second cup portion 22 and a second secton defined by part of the bottom portion 23 of the second cup portion 22 covered by the connection portion. The thickness of the adhesive 120 may be different in the first and second section. Alternatively, the thickness of the adhesive 120 may be constant in the entire volume.

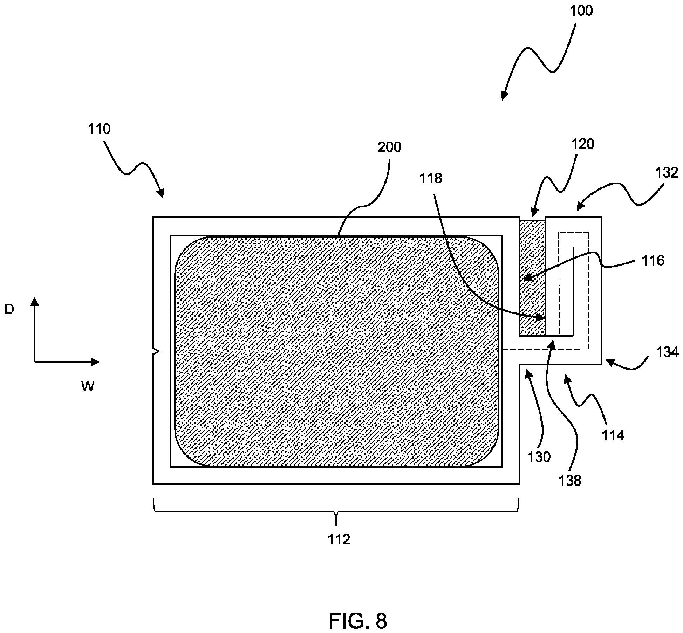

FIG. 8 shows an alternative embodiment of a battery 100. The pouch type battery 100 illustrated in FIG. 8 differs from that previously described with respect to the FIG. 4 essentially only in how the expansion portion 114 is folded. Unlike the previously described examples, where the expansion portion 114, was folded precisely once, the expansion portion 114 is folded two times in the embodiment shown in FIG. 8. The expansion portion 114 is connected to the accommodation portion 112 at a root section 130. The expansion portion 114 protrudes from the accommodation portion 112 beginning at the root section 130 and has a distal end 138 this with respect to the root section 130 (proximal end).

In the embodiment of the battery case 110 illustrated in FIG. 8, the expansion portion 114 is folded onto itself such that the distal end 138 abuts against the root section 130 of the expansion portion 114. The contact surface 118 of the folded expansion portion 114 extends from the distal end 138 to the first fold 132 where the expansion portion 114 is folded onto itself.

The connection portion 118 is provided by a surface section of the first (lower) surface of the expansion portion 114, facing down before the expansion portion 114 is folded toward the accommodation portion 112. The expansion portion 114 is folded twice in the example shown in FIG. 8. The expansion portion 114 is folded onto itself about a first fold 132 and the expansion portion 114 is folded around a second fold 134 near or at its root section 130 so that the contact surface 118 comes into engagement with the accommodation portion 112.

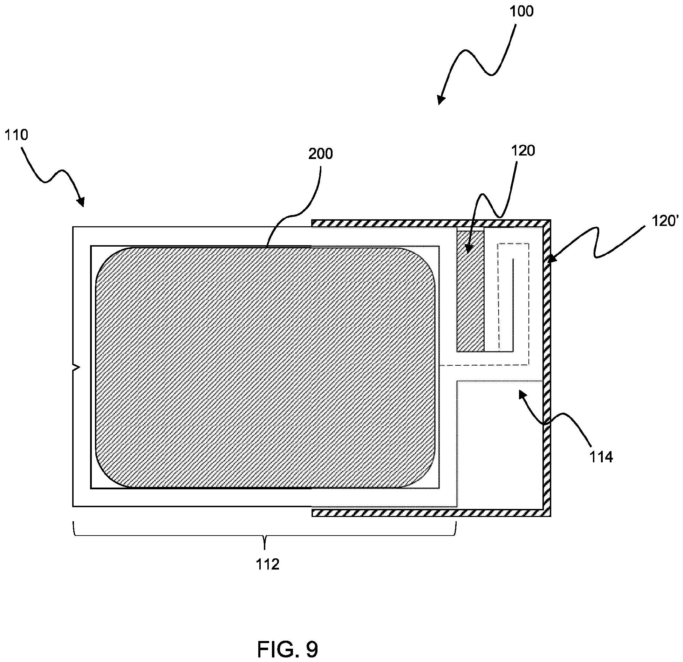

FIG. 9 illustrates another exemplary embodiment of the battery 100 with a twice folded expansion portion 114, as described above with respect to FIG. 8, with the addition of a cover 120' as described with respect to FIG. 7.

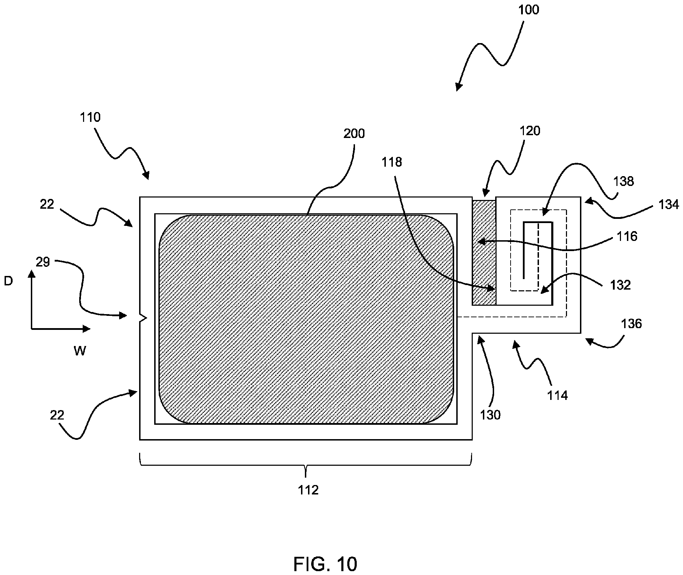

In the exemplary embodiment illustrated in FIG. 10, a battery 100 is illustrated, which differs from the embodiment shown in FIGs. 4 or 8 essentially only in that the expansion portion 114 is folded three times. The distal end 138 of the expansion portion 114 is folded around a first fold 132 (first foltline) onto a middle section of the expansion portion 114. The middle section together with first fold 132 (second foldline) and the distal end 138 are folded (in the same direction) around a second fold 134 such that the distal end 138 abuts against the inside of the second fold 134. Then, the expansion portion 114 is folded around a third fold 136 (third foldline) near or at the root section 130 such that the middle section lies on the accommodation portion 112 and faces the accommodation portion 112. The middle section thus realizes the connection portion 118. The middle section realizing the connection portion 1118 is a section of the (first, lower) surface of the expansion portion 114 facing downward before the expansion portion 114 is folded. In the folded state illustrated in FIG. 10, the middle section is folded toward the root section and faces the (upper) cup portion 22.

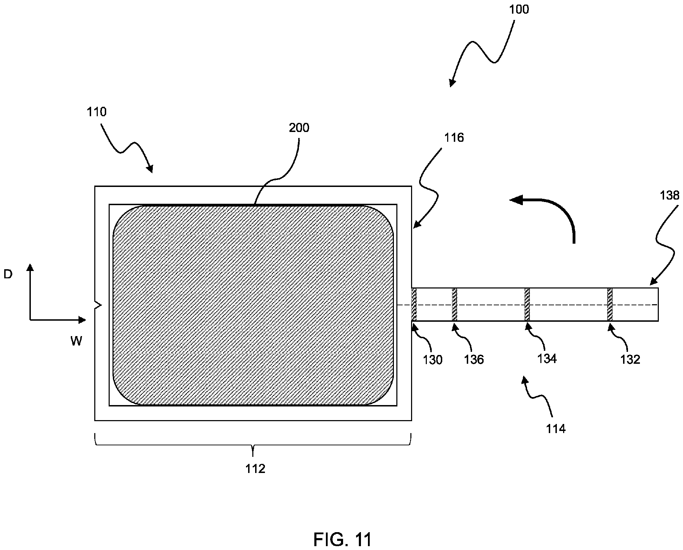

FIG. 11 shows a battery 100 and intermediate state before folding. The embodiment shown in FIG. 11 corresponds to that of FIG. 10 described above. The expansion portion 114 extends from the root section 130 to a distal end 138. The expansion portion 114 is configured to include a first fold 132, a second fold 134, and a third fold 136. The expansion portion 114 may be folded about the first, second and third fold 132, 134, 136 into the folded state as shown in FIG. 10. The adhesive 120 may be supplied to the sidewall 116 and/or to the contact surface 118 in the intermediate state shown in FIG. 11, before folding, or in the folded state shown in FIG. 10.

In embodiments comprising expansion portions 114 with two or more folds or foldlines, those foldlines may be parallel to one another. The one or more foldlines of the expansion portion 114 may be parallel with respect to the folding portion 29 on the opposite side of the accommodation portion 112.

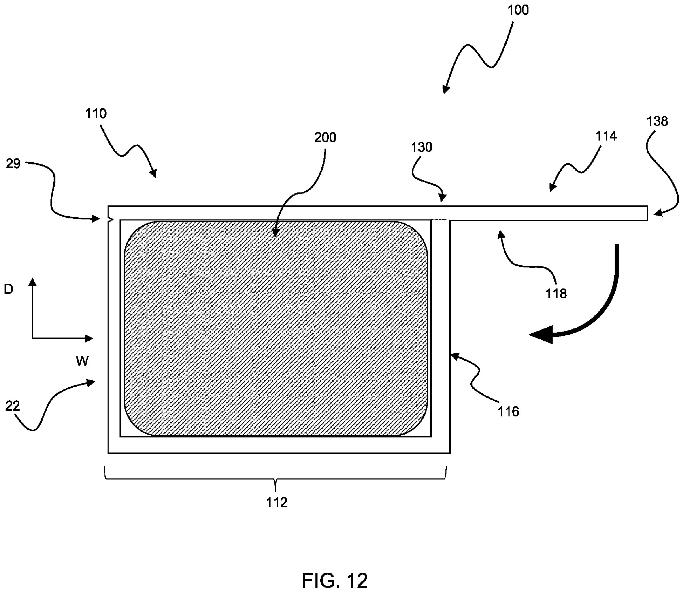

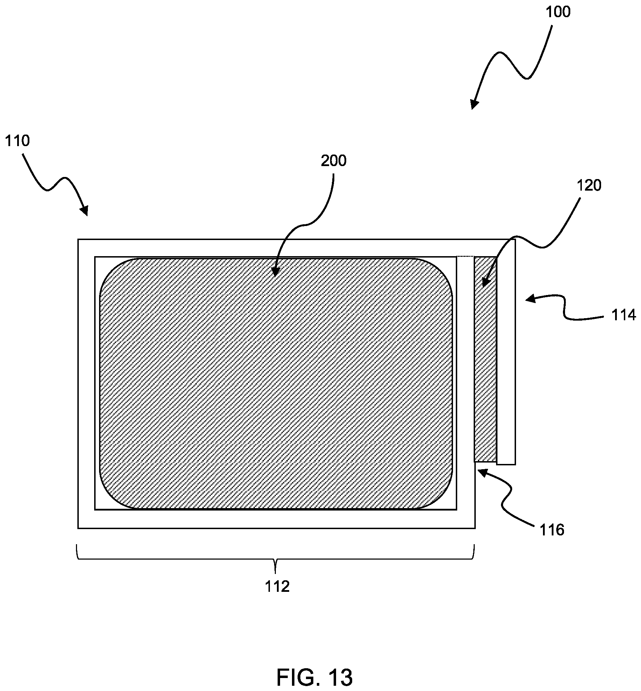

Yet another embodiment of an exemplary battery 100 is illustrate in an intermediate state in FIG. 12, and in a folded state in FIG. 13. Unlike the previously described pouch-type batteries 100, the embodiment illustrated in FIGs. 12 and 13 comprises a case 110 which has an accommodation portion 112 formed of only one cup portion 22. In the case 110 of FIGs. 12 and 13 a lid is folded about folding portion 29 onto the single cup portion 22. The accommodation space is confined by the lid and the single cup portion 22. The folding portion 29 is arranged in the stacking direction D and the top end of the accommodation portion 112. The expansion portion 114 is in this embodiment realized by the projection of the lid beyond the accommodation portion 112. The expansion portion 114 may be folded onto the sidewall 116 of the accommodation portion 112 substantially the same manner as described above with respect to FIG. 4. In the illustrated example shown in FIGs. 12 and 13, the expansion portion 114 to folded in a downward direction, such that the contact surface 118 comes to lie on the sidewall 116 of the bottom cup portion 22.

FIG. 13 schematically illustrates how adhesive 120 may be, provided between the contact surface 118 and sidewall 16. In the embodiment shown in FIG. 13, the adhesive may be applied before, during or after folding. Adhesive may be applied either in the folded state shown in FIG. 13 by injecting adhesive 120 into the volume, in the intermediate state shown in FIG. 12 by application of the adhesive to the contact surface 118 and/or onto the sidewall 116.

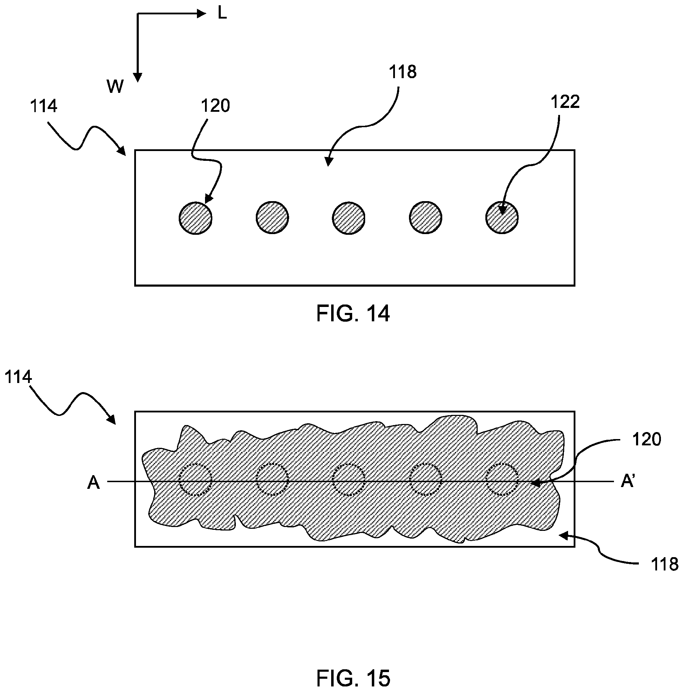

FIGs. 14 to 16 show schematic illustration of adhesive 120 provided in five circular deposition regions 122arranged in the section of the expansion portion 114 designated to act as the contact surface 118. The shape and size of all of the deposition regions 122 may be equal. The deposition regions 122 are provided in an equidistant manner manner in the lengthwise direction L.

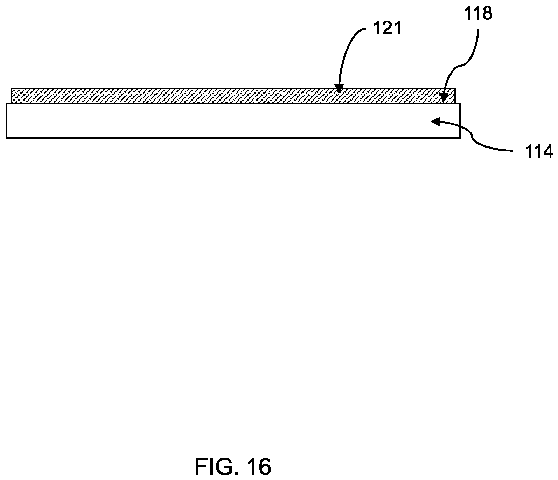

FIG. 15 indicates the deposition regions from which the adhesive 120 deposited as shown in Fig. 14 may be spread out laterally. FIG. 16 shows a schematic side view of the expansion portion 114 covered by an adhesive layer 100 20, which may be formed by spreading the adhesive on the contact surface 118 as indicated in FIG. 15. The the adhesive may be spread out as the expansion portion 114 is folded and/or rolled and thereby pressed against the accommodation portion (not illustrated in FIGs. 14 to 16).

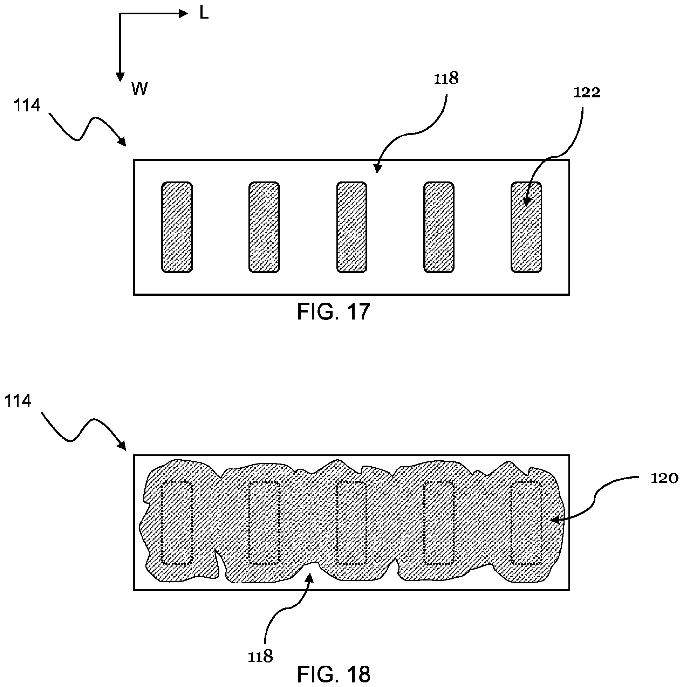

Figures 17 and 18 show a schematic illustration of a contact surface 118 onto which the adhesive 120 is provided, in five linear deposition regions 122. The embodiment of FIG. 17, the deposition regions 122 are of generally linear rectangular shape having a long side extending in width direction W. In the width direction W, the deposition regions 122 extend over more than half of the width of the unfolded expansion portion 114. The deposition regions 122 are spaced apart in the longitudinal direction L. The width of the short side of the rectangular portions deposition regions 122 is larger than than the distance between adjacent position portions 122. FIG. 18 shows the adhesive 120 spread out from the deposition regions 122 indicated in FIG. 17.

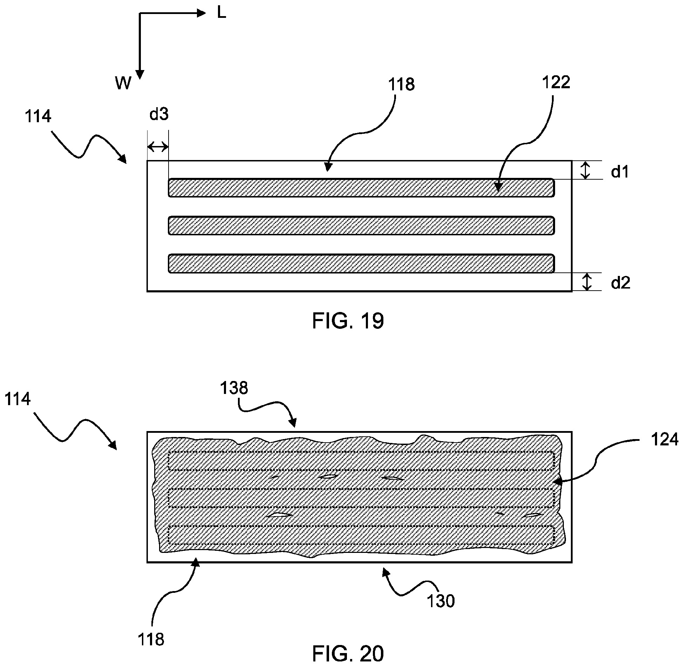

Figures 19 and 20 show two states of an expansion portion 114 with three parallel linear deposition regions 122. In the longitudinal direction L, the deposition regions 122extend over more than half, in particularly more than three quarters, of the length of the expansion portion 114. The lateral side edges of the case 110 are left free of adhesive. The third distance d3 is kept free of the adhesive along the entirety of the the opposite lateral side edges of the expansion portion 114.

A first distance d1 is left between the distal end 138 of the expansion portion 114, and the deposition region 122 closest to the distal end 138. A second distance d2 is kept free of adhesive between the first fold 132 or root section 130 of the expansion portion 114 and the deposition region 122 closest thereto. The distance between the linear deposition regions 122 in the width direction W may be equal to, less than, or more than the width of the deposition regions before spreading the adhesive 120. In the state shown in FIG. 20, the adhesive 120 is spread over almost the entire contact surface 118 from the deposition regions 122 shown in FIG. 19. Between 85% and 95% of the surface defined by the the contact surface 118 are covered by adhesive 120. As shown in FIGs. 15, 16, 18 and 20, adhesive 120 is contained in the volume confined by the projection of the contact surface 118.

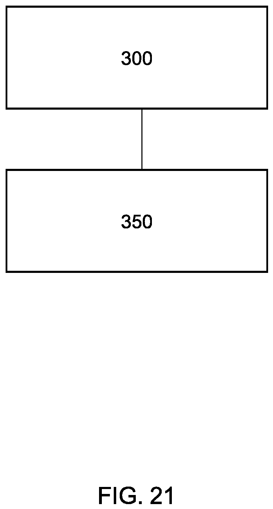

FIG. 21 shows a simple schematic illustration of a battery production method. The battery production method is preferably performed as described above. The battery manufaccturing method according to the schematic drawing of FIG. 21 includes a step 300 of providing a case 110. An electrode assembly, in particular stacked electrode assembly, may be arranged in an accommodation portion 112 of the case before or after the case is provided. The method according to FIG. 21 furthermore comprises, after the provision of the case, a step 350 of fixing the battery case 110.

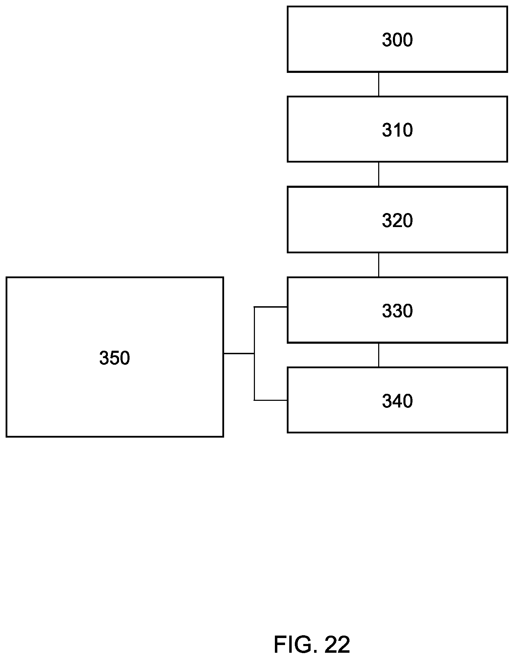

FIG. 22 shows a more detailled diagram of a battery manufacturing. The method starts with the step 300 of providing a case 300.

After the step 300 of providing the case 110, the method includes a step 310 of accommodating the electrode assembly inside of the case 110. A step of providing the electrode assembly 200 may be performed while or before a step 310 of accommodating the electrode assembly in the battery case 110, in particular a pouch-type battery case. A battery assembly 200 may be provided alongside or separately from the case 110.

The method illustrated in FIG. 22 further contains a step 320 of folding or rolling the expansion portion 14 of the case 110 is performed after step 310.

In the illustrated embodiment of the battery manufacturing method shown in FIG. 22, step 350 of fixing the expansion portion to the accommodation portion 112 includes a step 330 of depositing the adhesive, and step 340 of pressing the expansion portion 14 onto the accommodation portion 112. The adhesive 120 may be provided in several spaced apart deposition regions or individual segments. During the step 340, adhesive may be spread out from the deposition regions so that a single compound adhesive layer 141 is formed.

### LIST OF REFERENCE NUMERALS

- 11: separator
- 12: electrode
- 15: electrode tab
- 16: electrode lead
- 17: insulating part
- 21: shell
- 22: cup portion
- 23: bottom portion
- 24: sidewall
- 25: lateral wall
- 26: terrace / sealing portion
- 27: side portion
- 29: folding portion
- 100: battery
- 110: case
- 112: accomodation portion
- 114: expansion portion
- 116: side wall (body portion)
- 118: contact surface
- 120: adhesive
- 120': cover
- 121: adhesive portion
- 122: deposition regions
- 124: spread regions
- 130: root section (proximal end)
- 132: first fold
- 134: second fold
- 136: third fold
- 138: distal end
- d1, d2, d3: distance
- S1: recessed space
- D: stacking direction
- L: longitudinal direction
- W: width direction

## Claims

1. A battery (100) comprising:
an electrode assembly (200);
a case (110) including at least one accommodation portion (112) surrounding the electrode assembly (200) and an expansion portion (114) extending outwardly from the accommodation portion (112),
wherein the expansion portion (114) is folded or rolled toward the accommodation portion (112) such that a contact surface (118) of the expansion portion (114) lies on the accommodation portion (112) facing the accommodation portion (112),
wherein an adhesive (120) is provided between the expansion portion (114) and the accommodation portion (112) and covers the contact surface (118) at least partially.

2. The battery (100) of claim 1,
wherein the accommodation portion (112) comprises a bottom portion (23) and a sidewall (116), wherein the expansion portion (114) extends laterally outwards from the sidewall (116), and
wherein the electrode assembly (200) includes electrode sheets and one or more separator sheets alternately stacked on the bottom portion (23) in a stacking direction (D),
wherein the sidewall (116) extends in the stacking direction (D), and
the adhesive (120) is arranged between the expansion portion (114) and the sidewall (116).

3. The battery (100) of claim 1 or 2,
wherein the adhesive (120) is arranged within a volume confined between the contact surface (118) and the accommodation portion (112) and does not extend beyond the volume.

4. The battery (100) of any of the preceding claims,
wherein the adhesive (120) is provided in two or more adhesive segments.

5. The battery (100) of claim 4,
wherein at least one of the two or more adhesive segments includes at least one deposition region (122) in which the adhesive (120) is applied and a spread region in which the adhesive (120) extends from the at least one deposition region (122).

6. The battery (100) of any of the preceding claims,
wherein the adhesive (120) is a thermoplastic adhesive.

7. The battery (100) of any of the preceding claims,
wherein the case (110) is a single-piece element integrally including the accomodation portion (112) and the expansion portion (114).

8. The battery (100) of any of the preceding claims,
wherein the expansion portion (114) is fixed to the accommodation portion (112) by means of the adhesive (120).

9. A battery manufacturing method comprising:
providing a case (110) comprising an accommodation portion (112) configured to surround an electrode assembly (200) and an expansion portion extending outwardly from the accommodation portion (112),
arranging an electrode assembly (200) in the accommodation portion (112),
folding or rolling the expansion portion (114) toward the accommodation portion (112),
providing adhesive (120) so as to at least partially fill a volume confined between between the expansion portion (114) and the accommodation portion (112), and
fixing the expansion portion (114) to the accommodation portion (112) by means of the adhesive (120).

10. The method of claim 10, comprising:
applying an adhesive (120) on the accommodation portion (112) and/or the expansion

11. The method of claim 9 or 10, comprising:
folding or rolling the expansion portion (114) toward the sidewall (116) of the accommodation portion (112) so that the expansion portion (114) forms a contact surface (118) that faces the accomodation portion (112) and comes to lie on the accommodation portion (112),
wherein the adhesive (120) covers the contact surface (118) at least partially.

12. The method of any of claims 9 to 11, further comprising:
depositing the adhesive (120) in at least two deposition regions (122) on the expansion portion (114) and/or on the accomodation portion (112),
wherein the at least two deposition regions (122) are separate from each other.

13. The method of claim 12, further comprising:
pressing the expansion portion (114) and the accommodation portion (112) against each other, such that the adhesive (120) deposited in the at least two deposition regions spreads out laterally.

14. The method of any of claims 9 to 13,
wherein the adhesive (120) is provided in the shape of a circle, an oval, a polygon, a curve, a line, or a combination thereof.

15. An automated plant, particularly a smart factory,
wherein the automated plant is configured to perform the method of any one of claims 9 to 14.

## Amended claims

### Amended claims in accordance with Rule 137(2) EPC.

1. A battery (100) comprising:
an electrode assembly (200);
a case (110) including a pouch film, at least one accommodation portion (112) surrounding the electrode assembly (200), a folding portion (29) around which the pouch film is folded onto itself to confine the accommodation space (112) in a cup portion (22) and an expansion portion (114) opposite from the folding portion (29) in relation to the cup portion (22) on an opposite side with respect to the folding portion (29) and extending outwardly from the accommodation portion (112),
wherein the expansion portion (114) is folded or rolled toward the accommodation portion (112) such that a contact surface (118) of the expansion portion (114) lies on the accommodation portion (112) facing the accommodation portion (112),
wherein an adhesive (120) is provided between the expansion portion (114) and the accommodation portion (112) and covers the contact surface (118) only partially,
wherein the adhesive (120) covers at least 20% and no more than 75% of the contact surface (118), and
wherein the adhesive (120) is provided in two or more adhesive segments adjacent to one another.

2. The battery (100) of claim 1,
wherein the accommodation portion (112) comprises a bottom portion (23) and a sidewall (116), wherein the expansion portion (114) extends laterally outwards from the sidewall (116), and
wherein the electrode assembly (200) includes electrode sheets and one or more separator sheets alternately stacked on the bottom portion (23) in a stacking direction (D),
wherein the sidewall (116) extends in the stacking direction (D), and
the adhesive (120) is arranged between the expansion portion (114) and the sidewall (116).

3. The battery (100) of claim 1 or 2,
wherein the adhesive (120) is arranged within a volume confined between the contact surface (118) and the accommodation portion (112) and does not extend beyond the volume.

4. The battery (100) of claim any of the preceding claims,
wherein at least one of the two or more adhesive segments includes at least one deposition region (122) in which the adhesive (120) is applied and a spread region in which the adhesive (120) extends from the at least one deposition region (122).

5. The battery (100) of any of the preceding claims,
wherein the adhesive (120) is a thermoplastic adhesive.

6. The battery (100) of any of the preceding claims,
wherein the case (110) is a single-piece element integrally including the accommodation portion (112) and the expansion portion (114).

7. The battery (100) of any of the preceding claims,
wherein the expansion portion (114) is fixed to the accommodation portion (112) by means of the adhesive (120).

8. A battery manufacturing method comprising:
providing a case (110) comprising a pouch film, an accommodation portion (112) configured to surround an electrode assembly (200) ), a folding portion (29) around which the pouch film is folded onto itself to confine the accommodation space (112) in a cup portion (22) and an expansion portion opposite from the folding portion (29) in relation to the cup portion (22) on an opposite side with respect to the folding portion (29) and extending outwardly from the accommodation portion (112),
arranging an electrode assembly (200) in the accommodation portion (112),
folding or rolling the expansion portion (114) toward the accommodation portion (112),
providing adhesive (120) so as to only partially fill a volume confined between the expansion portion (114) and the accommodation portion (112), and
fixing the expansion portion (114) to the accommodation portion (112) by means of the adhesive (120), further comprising:
depositing the adhesive (120) in at least two deposition regions (122) on the expansion portion (114) and/or on the accommodation portion (112),
wherein the at least two deposition regions (122) are separate from each other, and
wherein the adhesive covers at least 20% and no more than 75% of a contact surface of the expansion portion (114) facing the accommodation portion (112).

9. The method of claim 8, comprising:
applying an adhesive (120) on the accommodation portion (112) and/or the expansion portion (114).

10. The method of claim 8 or 9, comprising:
folding or rolling the expansion portion (114) toward the sidewall (116) of the accommodation portion (112) so that the expansion portion (114) forms a contact surface (118) that faces the accommodation portion (112) and comes to lie on the accommodation portion (112),
wherein the adhesive (120) covers the contact surface (118) at least partially.

11. The method of any of the claims 8 to 10, further comprising:
pressing the expansion portion (114) and the accommodation portion (112) against each other, such that the adhesive (120) deposited in the at least two deposition regions spreads out laterally.

12. The method of any of claims 8 to 11,
wherein the adhesive (120) is provided in the shape of a circle, an oval, a polygon, a curve, a line, or a combination thereof.
